# EUROPEAN PATENT APPLICATION

(11) **EP 4 194 805 A1**
(43) Date of publication of application: **14.06.2023**
(21) Application number: 21213461.3
(22) Date of filing: 09.12.2021
(51) Int. Cl.: G01C 15/00

(54) **MOBILE REALITY CAPTURE DEVICE USING MOTION STATE DETECTION FOR PROVIDING FEEDBACK ON GENERATION OF 3D MEASUREMENT DATA**

(71) Applicant: Hexagon Technology Center GmbH, 9435 Heerbrugg (CH)
(72) Inventor: BADE, Nicholas, 9443 Widnau (CH); REIMANN, Bernd, CH-9435 Heerbrugg (CH); HAVNOR, Martin, NO-0875 Oslo (NO); FJELLVANG, Rune, NO-0196 Oslo (NO); PEPEK, Iga, CH-9443 Widnau (CH)
(74) Representative: Kaminski Harmann

(57) **Abstract**

The invention relates to a system for providing 3D surveying of an environment (31) by a mobile reality capture device (1) configured to be carried and moved during generation of 3D measurement data. A motion state tracker (19) is used to determine a motion pattern (21) of the mobile reality capture device (1), wherein, if a determined motion pattern (21) corresponds to a defined movement of the mobile reality capture device (1), the system is configured to automatically perform a derivation of an expected motion pattern (26) of the mobile reality capture device (1). The movement category (23) is associated to an environment-specific measurement movement of the mobile reality capture device (1), based on which an expected (best practice) motion pattern (26) of the mobile reality capture device (1) is associated to the current movement category (23). By carrying out a comparison of the determined motion pattern (21) and the expected motion pattern (26), feedback (27) regarding the comparison of the determined motion pattern (21) and the expected motion pattern (26) is provided.

## Description

The present invention relates to a system for providing 3D surveying of an environment by a mobile reality capture device configured to be carried and moved during generation of 3D measurement data.

By way of example, 3D surveying of a building and surrounding terrain is of interest for architects or craftsmen in order to quickly assess an actual condition of a room or a construction progress of a construction site, respectively, e.g. to effectively and efficiently plan the next work steps. By means of a digital visualization of the actual state, e.g. in the form of a point cloud or a vector file model, or by means of an augmented reality functionality, different options for further steps or expansion options can be examined and optionally presented to an employee or a customer in an easily accessible way.

By way of another example, 3D surveying is used for mapping the environment, e.g. for generating floor and room plans of a building, a tunnel plan of an underground facility, or a pipe map in an industrial plant.

An environment can be optically scanned, e.g. by means of a light time-of-flight method or photogrammetry, in order to measure 3D coordinates of a scene. For example, the environment is scanned by means of a laser scanner emitting a laser measurement beam, e.g. using pulsed electromagnetic radiation, wherein an echo is received from a backscattering surface point of the environment and a distance to the surface point is derived and associated with an angular emission direction of the associated laser measurement beam. This way, a three-dimensional point cloud is generated. For example, the distance measurement may be based on the time of flight, the shape, and/or the phase of the pulse.

For additional information, the laser scanner data may be combined with camera data, e.g. to provide high-resolution spectral information, e.g. by means of an RGB camera or an infrared camera.

For example, distance measuring modules used in lidar (light detection and ranging) scanners are capable of detecting intensity variations but have no color sensitivity, which is why a 3D model, particularly a point cloud or vector file model, purely generated by the lidar module may only be displayed in grayscale. As a result, many details remain hidden to a human observer due to the lack of color effect and the lack of color-supported depth effect. Therefore, often a "colored" 3D point cloud is generated by means of referencing the "gray" 3D point cloud of the lidar module with color data from a camera, which makes the display much easier for the human eye.

The referencing and fusion of different data types, e.g. laser scanner data, camera data, and positioning data such as from a global navigation satellite system, is now increasingly standardized.

In particular, reality capture devices may be mobile and configured to provide surveying data and referencing data at the same time, e.g. wherein at least trajectory data of the device, e.g. position and/or pose data, are provided with the probing data, e.g. lidar data and/or camera data, such that probing data of different positions and/or poses of the reality capture device can be combined into a common coordinate system. Often, reality capture devices are configured to autonomously create a 3D map of a new environment, e.g. by means of a simultaneous localization and mapping (SLAM) functionality.

The three-dimensional model data may then be analyzed by means of a feature recognition algorithm to automatically recognize semantic and/or geometric features captured by the probing data, e.g. by means of using shape information provided by virtual object data from a CAD model. Such feature recognition, particularly for recognizing geometric primitives, are nowadays widely used to analyze 3D data.

Particular problems of prior art monitoring devices relate to the handling of changing environmental conditions such as changes of surface reflectivity which requires the lidar sensor to be able to cope with large dynamic ranges, i.e. the range from the lowest measureable intensity level to the highest measurable intensity level. Further problems relate to changes in ambient light, which can saturate the camera sensors or lead to low signal-to-noise of the camera data.

For mobile, e.g. hand-held or backpack-supported, lidar-based reality capture devices such as the Leica BLK2GO a new range of problems arise compared to stationary laser scanners. By way of example, the close distance between surveyor and device causes shading in the acquired point clouds, requiring the surveyor to learn specific gestures or movements when operating the device in different measurement scenarios to ensure smooth operation and sufficient data quality. Such challenging measurement scenarios include walking next to a wall, walking through a long corridor, opening a door, or walking stairs or a ramp downstairs.

By way of example, when walking next to a wall the surveyor should keep the device in the hand, which is farther away from the wall. This might require a change of hands in which the device is hold. When opening a door or walking through a long corridor the device should be lifted up and to the side so that the device is not blocked by the surveyor's body and receives more data points from behind the surveyor to improve the SLAM algorithm. For example, this is required because for a long corridor the end of the corridor might be too far away leaving only the walls on the side for the SLAM process which might not be enough. When opening a door there is a sudden change in the environment with many new data points being recorded as soon as the door opens, which makes localization difficult. When walking downstairs the device needs to be tilted down such that the region of measurement of the laser scanner still "reaches" the stairs/floor and covers data points from there. The user should either walk upstairs or tilt the device down far enough that the stairs are visible to the device's sensors. Further problem areas may be (list is not exhaustive) detection of drops of the device, measuring during turns, walking too slow or too fast, differences between skill level of operator, differences between left-handed and right-handed movements, etc.

Similar problems may arise in case the mobile reality capture device is arranged on a robotic vehicle, e.g. an autonomously moving ground-based or aerial vehicle. By way of example, the mobile reality capture device may be carried by a legged robot, e.g. a four-legged robot, which is often able to freely move in a building because it can handle obstacles such as staircases. Another possibility would be to use aerial drones, e.g. quadcopter drones, which allow further versatility to survey areas that are difficult to access, but often to the expense of less surveying time and/or sensor complexity due to limited load capacity and battery power.

It is therefore an object of the present invention to provide improved reality capture with a mobile reality capture device, which is easier to use and allows faster and more reliable capture of a changing environment, particularly an indoor and outdoor environment of a building or industrial facility.

A further object is to provide improved reality capture with a mobile reality capture device, which is less susceptible to changing environmental conditions.

These objects are achieved by realising at least part of the features of the independent claims. Features which further develop the invention in an alternative or advantageous manner are described in the dependent patent claims.

The invention relates to a system for providing 3D surveying of an environment, wherein the system comprises a mobile reality capture device configured to be carried and moved during generation of 3D measurement data. The mobile reality capture device comprises a 3D surveying unit configured to provide the generation of the 3D measurement data for carrying out a spatial 3D measurement of the environment relative to the mobile reality capture device, wherein the 3D surveying unit is configured to provide the spatial 3D measurement with a field-of-view of 360 degrees around a first device axis and 120 degrees around a second device axis perpendicular to the first device axis.

For example, the 3D surveying unit is embodied as a laser scanner configured to carry out, during movement of the mobile reality capture device, a scanning movement of a laser measurement beam relative to two rotation axes in order to provide the generation of the 3D measurement data based thereon.

The system further comprises an inertial measurement unit (IMU) comprising sensors including accelerometers and/or gyroscopes, and being configured to continuously generate IMU data related to a pose and/or acceleration of the mobile reality capture device.

By way of example, the mobile reality capture device comprises the inertial measurement unit configured to generate the inertial data regarding the movement of the mobile reality capture device. Alternatively or in addition, the mobile reality capture device is configured to communicate with a companion device being attached to the mobile reality capture device, e.g. a tablet or a smartphone, and to use data of an inertial measurement unit of the companion device to measure the motion pattern of the mobile reality capture device.

A simultaneous localization and mapping unit is configured to carry out a simultaneous localization and mapping (SLAM) process, comprising generation of a map of the environment and determination of a trajectory of the mobile reality capture device in the map of the environment.

By way of example, the SLAM process makes use of at least one of the inertial data (so-called IMU-SLAM), visual data of a camera of the mobile reality capture device or a companion device being attached to the mobile reality capture device (so-called visual SLAM: VSLAM), lidar-based 3D measurement data (so-called lidar SLAM), and GPS data, e.g. such as GNSS data and RTK data.

The 3D measurement data may be generated in such a way that they are associated with localization data providing for a referencing of 3D measurement data generated at different positions with respect to a common coordinate system. By way of example, the 3D measurement data are generated in a way that data from different positions of the mobile reality capture device are referenced to each other by means of a localization unit, which, for example, makes use of the SLAM process. Alternatively or in addition, the 3D measurement data of different positions of the mobile reality capture device are referenced to each other by post-processing, e.g. by using a feature matching algorithm on the 3D measurement data.

The system further comprises a motion state tracker configured to use motion data regarding a movement of the mobile reality capture device to determine a motion pattern of the mobile reality capture device. For example, the motion data are provided by the IMU data, e.g. raw IMU data or processed IMU data. Alternatively or in addition, the motion data are derived from SLAM data of the SLAM unit.

If a determined motion pattern corresponds to a defined movement category associated to an environment-specific measurement movement of the mobile reality capture device, the system is configured to automatically perform a derivation of an expected motion pattern of the mobile reality capture device for the environment-specific measurement movement. A comparison of the determined motion pattern and the expected motion pattern is carried out by the system in order to provide feedback regarding the comparison of the determined motion pattern and the expected motion pattern.

In particular, the mobile reality capture device may be configured to take into account the feedback to automatically perform an action associated with the expected motion pattern. For example, the feedback may be taken into account for real time user guidance, e.g. for triggering a command instructing a user to specifically move the device such as "hold the device more horizontal or vertical" or for indicating a target movement by means of an augmented reality device by drawing guidance to point the device towards a marker or object. The feedback may also be used for starting a user training, e.g. for triggering an alert to the surveyor's supervisor, for proposing a training program, or for triggering a log event for backend storage for later use (e.g. to create user stories). Another possibility is to use specific movements to trigger specific functionalities of the mobile reality capture device, e.g. a specific movement to shut down the mobile reality capture device.

By way of example, the determination of the motion pattern, the derivation of the expected motion pattern, and the comparison of the determined motion pattern and the expected motion pattern are carried out in real time, e.g. wherein the feedback is provided to the mobile reality capture device and/or a companion device for real time guidance of a user or robotic carrier of the mobile reality capture device. For example, the comparison is used to verify that a surveyor is operating the device as specified. If not, the surveyor is provided with feedback to adjust movement of the mobile reality capture device, e.g. by means of at least one of a visual indication, an acoustic indication, or an indication via a companion device such as a tablet or smartphone communicating with the system, e.g. communicating with the mobile reality capture device.

Alternatively or in addition, the feedback is provided to a training algorithm to improve categorization of motion patterns and/or derivation of expected motion patterns.

In one embodiment, the system comprises a database comprising a plurality of defined motion patterns, each defined motion pattern being associated with an environment-specific measurement movement of the mobile reality capture device, e.g. wherein each defined motion pattern is either pre-defined or user-defined. The database is used for a categorization of the determined motion pattern and/or the derivation of the expected motion pattern.

For example, the system is configured to establish a data connection with a remote server computer and to provide motion data to the remote server computer. The system may then be configured to detect typical behavior of a carrier of the mobile reality capture device from the motion data and to send corresponding motion data to the remote server computer, wherein the sent data is dedicated to update pre-defined motion patterns stored at the remote server computer and the system is configured to receive updated pre-defined motion patterns from the remote server computer.

By way of example, the environment-specific measurement movement is a movement of the mobile reality capture device specifically foreseen to ensure a defined quality, e.g. a defined coordinate measuring accuracy and/or measurement point density, of the 3D surveying unit. For example, the environment-specific measurement movement comprises at least one of a measurement movement when carrying the mobile reality capture device during opening and/or closing a door, a measurement movement when carrying the mobile reality capture device during walking through a door, a measurement movement when walking the mobile reality capture device along a corridor or in a tunnel, and a measurement movement when carrying the mobile reality capture device during climbing or descending a staircase.

In a further embodiment, the expected motion pattern provides a nominal orientation or a sequence of nominal orientations of the mobile reality capture device with regard to three mutually perpendicular axes of rotation of the mobile reality capture device, e.g. a roll, pitch, and yaw axis of the mobile reality capture device.

In a further embodiment, the expected motion pattern provides a nominal relative position change or a sequence of nominal relative position changes of the mobile reality capture device with respect to a current position of the mobile reality capture device with regard to three mutually perpendicular spatial axes, e.g. wherein the three mutually perpendicular spatial axes are provided with reference to the gravity vector, particularly wherein one of the spatial axes is parallel to the gravity vector.

For example, a correspondence of the determined motion pattern to the defined movement category and/or the derivation of the expected motion pattern is/are provided by a machine learning (ML) algorithm, which comprises processing of the motion data by a Kalman filter for an estimation of an attitude parameter, and particularly a velocity parameter, of the mobile reality capture device.

By way of example, one or several machine learning models such as Decision Trees, Random Forests, Support Vector Machines (SVMs) or Neural Networks are trained to classify the determined motion pattern into different movement categories. For example, these models may run on a computing unit of the mobile reality capture device, e.g. wherein these models run on the edge, i.e. on the mobile reality capture device itself. Alternatively, or in addition, the mobile reality capture device may be configured to establish a data connection with a separate computing unit, e.g. on a central server or on a companion device such as a smartphone or tablet, wherein at least part of the models run on the separate computing unit. Several machine learning models may run in parallel for detecting several motion states at once since states might overlap or consist of concatenated states (such as, for example, a movement sideways in combination with a movement upwards).

For example, the processing of the motion data is carried out in sections for time windows of at least 1.5 seconds each. Alternatively, the processing of the motion data is carried out in a rolling fashion by continuously processing a continuously generated time series of the motion data.

In a further embodiment, the correspondence of the determined motion pattern to the defined movement category and/or the derivation of the expected motion pattern is/are provided by taking into account a feature extraction step, which provides detection of a signal feature out of a plurality of different signal features, wherein each of the signal features is indicative of a defined environment-specific measurement movement out of a plurality of defined environment-specific measurement movements. The feature extraction step is then used for the estimation of the attitude parameter, and particularly the velocity parameter, e.g. wherein the signal feature is used as input to a classical machine learning algorithm.

By way of example, the feature extraction step is provided by a deep learning algorithm configured to learn the signal features independently. Alternatively, e.g. in case of a classical machine learning algorithm, the feature extraction step is provided by a computing of the motion data with defined statistics in the frequency and/or time domain of the motion data.

The mobile reality capture device can be used by a variety of different carriers, e.g. people or robots, and be combined with different companion devices, e.g. wherein a smartphone or tablet is attached to the mobile reality capture device for user guidance. For example, the mobile reality capture device may be configured to be handheld by a user or to be mounted in backpack-style. If arranged on a robot, a variety of different robot types could be used, e.g. wheel-based or legged robots, aerial vehicles, wherein the device itself and/or accessories can be mounted in a variety of different spatial arrangements. This causes different geometric dimensions of the setup, weight distributions and/or moments of inertia. Particularly when using a machine learning model, the system may be configured to be able to cope with a variety of different configurations and uses of the mobile reality capture device. For example, the system could be configured to learn different configurations and associated environment-specific measurement motions implicitly by so-called transfer learning or explicitly by means of a dedicated calibration functionality to be carried out by the carrier of the mobile reality capture device.

By way of example, the system is configured to analyze motion data in order to generate a movement model that takes into account parameters of a range of motion for a relative movement of the mobile reality capture device when it is carried and aligned by the carrier and/or a weight-distribution of a combination of the mobile reality capture device with a companion device and/or the carrier. For example, a center of mass and a moment of inertia of the combination of the mobile reality capture device with the companion device and/or the carrier is/are determined. The movement model is then taken into account for at least one of a providing of a correspondence of the determined motion pattern to the defined movement category, the derivation of the expected motion pattern, and the comparison of the determined motion pattern with the expected motion pattern.

Generation of the movement model may be based on an optimization of a general model with free parameters, wherein the general model is adapted to the respective mobile reality capture device, e.g. with different geometric device dimensions, device configurations such as configuration with or without attached companion device, different mounting configurations of companion devices, centers of mass and moments of inertia, and the user, e.g. with different body sizes, arm and leg lengths, etc.

In a further embodiment, the mobile reality capture device comprises a calibration functionality based on a set of pre-defined control movements of the mobile reality capture device to be carried out by the carrier, wherein motion data measured during the control movements are analyzed in order to generate the movement model. For example, the parameters of the range of motion provide information on a length of a boom-component (e.g. an arm length of a human carrier) carrying the mobile reality capture device.

Assessing a current measurement situation predominantly based on motion data provides the benefit that it is essentially independent of changing environmental conditions. If available, the assessment of the current measurement situation can be improved by so-called context specific evaluation, wherein additional context on the environment and the arrangement of the mobile reality capture device within the environment is provided by visual sensors, e.g. of the mobile reality capture device and/or a companion device. For example, context specific evaluation includes a detection of a proximity to a wall based on distance measurement values from the 3D surveying unit or a detection of a movement through a door using ML-based «Door Detection» algorithms from image and/or lidar data.

In a further embodiment, the mobile reality capture device is configured to derive perception data, e.g. from the 3D measurement data and/or from a sensor of the simultaneous localization and mapping unit, wherein the perception data provide for a visual recognition of spatial features of the environment and for an evaluation of a spatial arrangement of the mobile reality capture device relative to the spatial features. The system is configured to analyze the perception data in order to provide a recognition of an environment-specific measurement situation with regard to a spatial arrangement of the mobile reality capture device relative to spatial features in the environment, and to take into account the environment-specific measurement situation for deriving a motion category of the determined motion pattern (e.g. to recognize the presence of the defined motion category) and/or for the derivation of the expected motion pattern.

By way of example, the system is configured to access a database comprising a set of geometric and/or semantic classes of spatial features with corresponding classification parameters for identifying the geometric and/or semantic classes by the perception data. Each of the geometric and/or semantic classes is associated with at least one of a rule regarding a minimum and/or a maximum distance between the mobile reality capture device and the corresponding spatial feature associated with that class and a rule regarding a nominal relative orientation of the mobile reality capture device to the corresponding spatial feature associated with that class. The system is configured to use the database to recognize the environment-specific measurement situation and to take into account the environment-specific measurement situation for deriving a motion category of the determined motion pattern (e.g. to recognize the defined motion category) and/or for the derivation of the expected motion pattern.

For example, the system comprises an optimization algorithm taking into account the information of the motion state tracker and the rules provided by the database in order to refine the derivation of the expected motion pattern.

In a further embodiment, the system comprises an object detection algorithm based on machine learning, wherein the object detection algorithm is specifically configured to identify a spatial constellation within the perception data, e.g. a door, a corridor, and a staircase. The spatial constellation is associated with a pre-defined sequence of motion states of the mobile reality capture device, e.g. a sequence of relative orientations and/or distances between the mobile reality capture device and the spatial constellation. The system is configured to take into account an identification of the spatial constellation by the object detection algorithm for the recognition of the environment-specific measurement situation, wherein the pre-defined sequence of motion states is taken into account for the derivation of the expected motion pattern of the mobile reality capture device.

In a further embodiment, the system is configured to access mapping data providing a model of the environment, e.g. a relocalization map based on a sparse point cloud, a building-information model (BIM) or a computer-aided design (CAD) model, or similarly structured data, and to track a location of the mobile reality capture device within the model of the environment. Then the location of the mobile reality capture device is taken into account for deriving a motion category (e.g. to recognize the defined motion category) of the determined motion pattern and/or the derivation of the expected motion pattern.

In a further embodiment, the system comprises an object detection algorithm as described above and a location of the mobile reality capture device within a model of the environment is used to identify the spatial constellation for the recognition of the environment-specific measurement situation. Thus, for example, by continuously tracking its location within the model of the environment the system can eliminate false positives by comparing classes of motion patterns detected to its geometrical surroundings. Alternatively, or in addition, the comparison of the determined motion pattern and the expected motion pattern is triggered by an identification of the spatial constellation. For example, it is only checked if the mobile reality capture device is lifted side- and upwards once the spatial constellation indicates that "a door is close and likely will be passed".

The invention further relates to a method for 3D surveying of an environment by using a mobile reality capture device, which comprises a 3D surveying unit configured to provide a generation of 3D measurement data for carrying out a spatial 3D measurement of the environment relative to the mobile reality capture device, wherein the 3D surveying unit is configured to provide the spatial 3D measurement with a field-of-view of 360 degrees around a first device axis and 120 degrees around a second device axis perpendicular to the first device axis. The method comprises the steps of: generating the 3D measurement data by using the 3D surveying unit during a movement of the mobile reality capture device; generating IMU data related to a pose and/or acceleration of the mobile reality capture device; carrying out a simultaneous localization and mapping process comprising generation of a map of the environment and determination of a trajectory of the mobile reality capture device in the map of the environment; determining a motion pattern of the mobile reality capture device by using motion data regarding a movement of the mobile reality capture device; associating the determined motion pattern with a defined movement category associated to an environment-specific measurement movement of the mobile reality capture device; performing a derivation of an expected motion pattern of the mobile reality capture device for the environment-specific measurement movement as a function of the defined movement category, carrying out a comparison of the determined motion pattern and the expected motion pattern; and providing feedback regarding the comparison of the determined motion pattern and the expected motion pattern, particularly wherein the feedback is taken into account to perform an action associated with the expected motion pattern.

Embodiments of the method may comprise further steps which are necessary to implement and/or run a system as described above, in particular any of the described processing, derivation, usage, and determination steps as described above for the system.

The invention further relates to a computer program product comprising program code stored on a machine-readable medium or being embodied by an electromagnetic wave comprising a program code segment, wherein the program code comprises computer-executable instructions for performing, when executed in a surveying system, e.g. in a system as described above, the method as described above.

The system, method, and computer program product according to the different aspects of the invention are described or explained in more detail below, purely by way of example, with reference to working examples shown schematically in the drawing. Identical elements are labelled with the same reference numerals in the figures. The described embodiments are generally not shown true to scale and they are also not to be interpreted as limiting the invention. Specifically,
- Fig. 1:: an exemplary embodiment of the mobile reality capture device;
- Fig. 2:: an exemplary embodiment of a laser scanner to be used within the mobile reality capture device;
- Fig. 3:: an exemplary environment-specific measurement situation where a user walks down stairs;
- Fig. 4:: a further exemplary environment-specific measurement situation where a user walks through a long corridor;
- Fig. 5:: a further exemplary environment-specific measurement situation where a user walks next to a wall;
- Fig. 6:: a further exemplary embodiment of a mobile reality capture device, comprising an LED-ring and an interface to attach a companion device to provide feedback to the user;
- Fig. 7:: an exemplary embodiment of the IMU data analysis to detect the behavior of the surveyor and to provide the surveyor with feedback regarding the best practice and his current behavior;
- Fig. 8:: a further exemplary embodiment of the IMU data analysis, additionally comprising an analysis of perception data;
- Fig. 9:: an exemplary embodiment, wherein the mobile reality capture device is carried by a robot to survey a building.

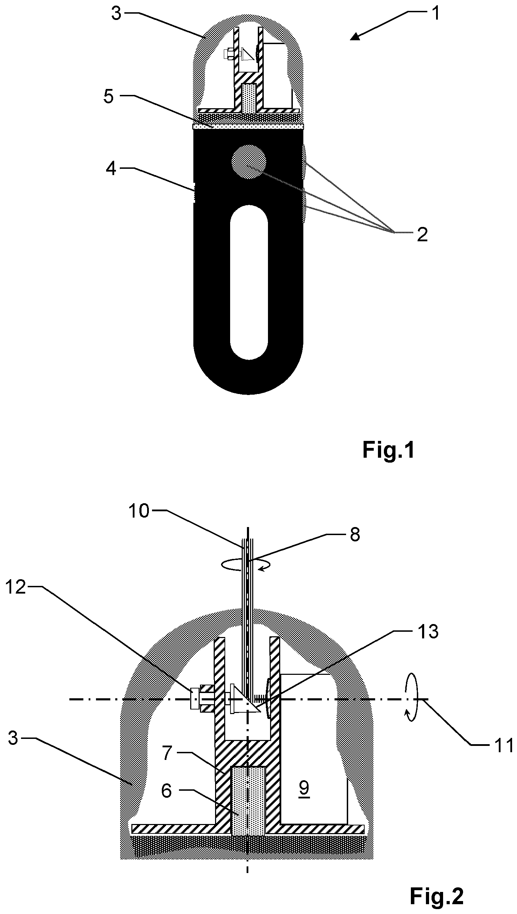

**Figure 1** shows an exemplary embodiment of a mobile reality capture device 1, comprising a laser scanner (see details in Fig. 2) and a camera unit with a plurality of cameras 2.

The laser scanner has a cover 3, which is opaque for visible light but optically transmissive for the laser measurement beam. Together with a base of the laser scanner the cover 3 forms a closed housing which is stationary with respect to the mobile reality capture device, wherein all moving parts of the laser scanner are enclosed by the housing.

By way of example, the mobile reality capture device is configured to require only a minimum number of controls integrated into the device. For example, the device has only a single integrated control element 4, wherein individual measurement programs and/or actions of the reality capture device can be triggered by different tap sequences of the control element 4. Such measurement programs or actions may include at least one of: activating/deactivating the laser scanner, starting a defined measuring process, or interrupting/canceling and restarting the measuring process.

The mobile reality capture device can also be configured such that defined measurement programs and actions are stored on the device and/or that new measurement programs and actions can be defined by the user, e.g. via a companion device such as a tablet.

By way of example, the mobile reality capture device further comprises a light indicator 5, e.g. for indicating a device status in such a way that the status indication looks uniform in all azimuthal directions around the standing axis of the reality capture device. Furthermore, the light indicator 5 may be configured to provide guiding instructions.

**Figure 2** shows a close-up of the laser scanner from Fig. 1, comprising a base 6 and a support 7, the support 7 being rotatably mounted on the base 6 about a support rotation axis 8. Often the rotation of the support 7 about the support rotation axis 8 is also called azimuthal rotation, regardless of whether the laser scanner, or the support rotation axis 8, is aligned exactly vertically.

The core of the laser scanner is an optical distance measuring unit 9 arranged at the support 7 and configured to perform a distance measurement by emitting a transmission radiation 10, e.g. pulsed laser radiation, and by detecting returning parts of the transmission radiation by means of a receiving unit comprising a photosensitive sensor. Thus, a pulse echo is received from a backscattering surface point of the environment, wherein a distance to the surface point can be derived based on the time of flight, the shape, and/or the phase of the emitted pulse.

In the embodiment shown, the scanning movement of the laser measurement beam about the two rotation axes 8,11 is carried out by rotating the support 7 relative to the base 6 about the support rotation axis 8 and by means of a rotating body 12, which is rotatably mounted on the support 7 and rotates about a beam rotation axis 11.

By way of example, both the transmission radiation 10 and the returning parts of the transmission radiation are deflected by means of a reflecting surface 13 integral with the rotating body 12 or applied to the rotating body 12.

Alternatively, the transmission radiation is coming from the side facing away from the reflecting surface 13, i.e. coming from the inside of the rotating body 12, and emitted into the environment via a passage area within the reflecting surface (not shown).

For the determination of the emission direction of the distance measuring beam 10 many different angle determining units are known in the prior art. For example, the emission direction may be detected by means of angle encoders, which are configured for the acquisition of angular data for the detection of absolute angular positions and/or relative angular changes of the support 7 about the support rotation axis 8, or of the rotating body 12 about the beam rotation axis 11, respectively. Another possibility is to determine the angular positions of the support 7 or the rotating body, respectively, by only detecting full revolutions and using knowledge of the set rotation frequency.

A visualization of the data can be based on commonly known data processing steps and/or display options, e.g. wherein the acquired data is presented in the form of a 3D point cloud, a 3D vector file model, a voxel, or a mesh.

One of the challenges when mapping/collecting data with a mobile reality capture device as described above are the movements/actions the user needs to perform to capture the data with sufficient quality. It may take an unexperienced user some time to master this data capture process. According to one aspect of the invention a user is guided/taught to carry out the correct movement, e.g. wherein a not optimal movement provides feedback and hints to the user to adapt towards a correct data capture process. For example, the feedback could be an explicit movement instruction or an instruction relative to what the user is doing at the moment. Alternatively or in addition, correct movement may also be indicated.

The feedback may be provided in real time. Alternatively or in addition, feedback may be derived/improved in postprocessing, which offers additional possibilities for defining or deriving an expected motion pattern and provides additional robustness for learning or categorizing determined motion patterns.

By way of example, user guidance is provided by analyzing a usage pattern of inertial data read from an inertial measurement unit (IMU) associated with the movement of the mobile reality capture device. By way of example, the inertial data are provided by an IMU of the mobile reality captured device. Alternatively or in addition, the mobile reality capture device is configured to communicate with a companion device being attached to the mobile reality capture device, e.g. a tablet or a smartphone, and to use data of an inertial measurement unit of the companion device to measure the motion pattern of the mobile reality capture device.

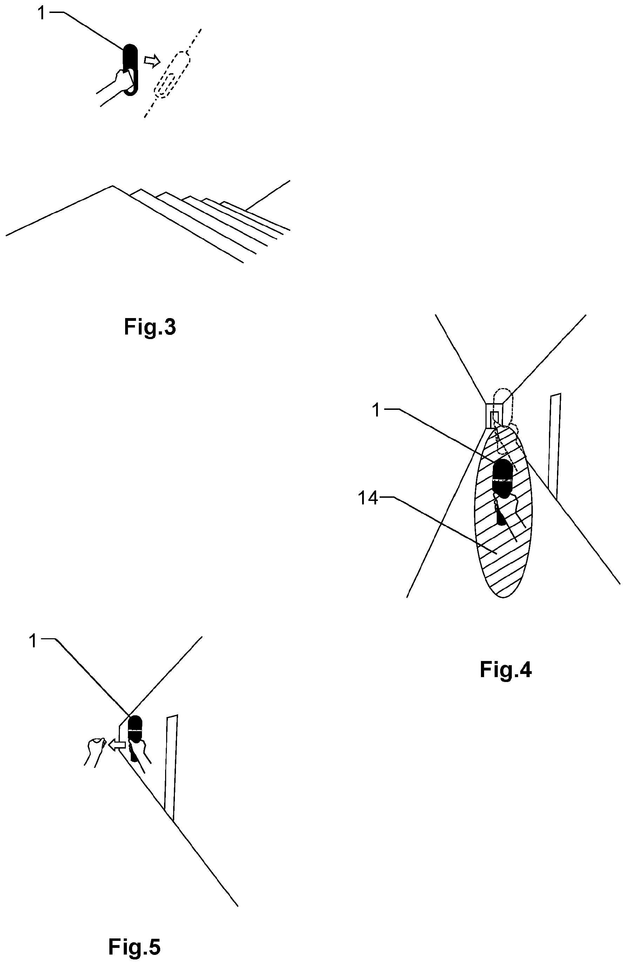

**Figures 3 to 5** show different environment-specific measurement situations with regard to a spatial arrangement of the mobile reality capture device 1 relative to spatial features in the environment, where the user needs to follow certain environment-specific measurement movements of the mobile reality capture device 1 to ensure optimal data quality.

**Figure 3** depicts a scenario, i.e. an environment-specific measurement situation, where a user walks down stairs. In a nominal upright position, mobile reality capture devices often have a limited field-of-view towards the ground. Thus, in order to measure the stairs the user should either walk upstairs or tilt the device down when walking downstairs such that the stairs are visible to the device's sensors, particularly the lidar unit.

**Figure 4** depicts a scenario where the user walks through a long corridor. Here, the mobile reality capture device 1 should be lifted up so that the device is not blocked 14 by the body of the user and receives more data points also from behind the user to improve the SLAM algorithm. For example, this is required because for a long corridor the end of the corridor might be too far away leaving only the walls on the side for SLAM which might not be enough. In particular, if possible, the mobile reality capture device 1 should be lifted up and to the side to avoid field-of-view blockage 14 by the user's body. In the figure, side movement is limited because the mobile reality capture device 1 should also not be positioned too close to the walls (see below).

**Figure 5** depicts a scenario where the user walks next to a wall. In order to increase efficiency, for example, the user should keep the device in the hand which is farther away from the wall. This might require a change of hands in which the device is hold.

By way of example, another environment-specific measurement situation relates to a scenario of opening a door, where a sudden change in the environment with many new data points occurs as soon as the door opens, which could make localization difficult. Here, it might be required to lift the mobile reality device up while the user pauses briefly under the door. Furthermore, it might be recommended that the device is kept in (or switched to) the hand away from the door and that the user walks sideways through the door.

According to one aspect of the invention, the IMU data and possibly further visual data are analyzed to detect if the surveyor follows these best practices and by detecting these events (change of hands, device moved up and to the side, device tilted down, surveyor briefly rests, etc.) with machine learning. By verifying whether the surveyor is operating the mobile reality capture device as specified, the user is given information / instructions to help him operating the device in the correct manner. For example, a certain event in an environment-specific measurement situation is associated to a certain event-specific measurement movement of the mobile reality capture device. In case the system has not yet detected the movement upon detection of the event, the user is instructed to follow this event-specific measurement movement. For example, if the system detects that the user walks down a stair but has not tilted the device, the user is informed to do so. The same applies for the other mentioned motions / gestures.

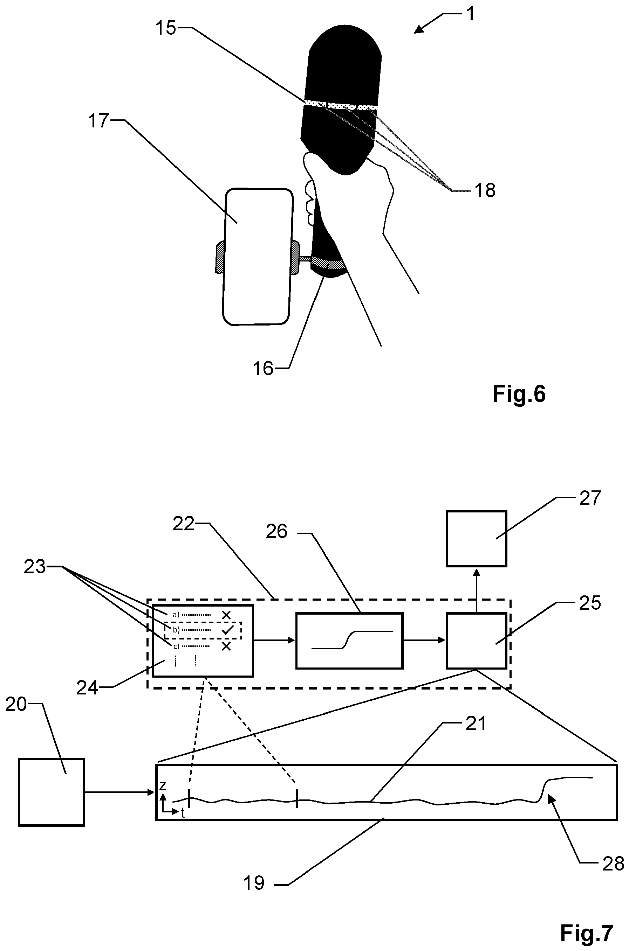

**Figure 6** depicts another exemplary embodiment of the mobile reality capture device 1, here comprising an LED-ring 15 and an interface 16 to attach a companion device 17, e.g. a smartphone. The companion device 17 and the mobile reality capture device 1 are configured to communicate with each other, e.g. by wired or wireless connection.

By way of example, the LED-ring 15 comprises multiple light indicators 18, wherein each of the light indicators is assigned to a different azimuthal direction (for a nominal upright arrangement of the device). By way of example, the multiple light indicators 18 comprise six light indicators such that the light indicators 18 correspond with a "forward" direction (e.g. opposite the control element 4 depicted by Fig. 1), a "backward" direction, a "forward left" direction, a "forward right" direction, a "backward left" direction, and a "backward right" direction.

For example, the light indicators may provide, e.g. in real time, an indication of an expected measurement movement / gesture of the mobile reality capture device 1 to be carried out to ensure good data quality of the lidar data. The indication may be given by an assignment of a pre-defined movement sequence and/or of a relative direction to one of the light indicators, e.g. wherein different information is provided by means of a blink and/or color coding of the LED-ring and/or the light indicators.

Alternatively or in addition, the indication of the expected measurement movement / gesture of the mobile reality capture device 1 is provided via the companion device 17. For example, this way additional or more detailed information is provided, e.g. for an inexperienced user who is learning correct handling of the mobile reality capture device. A representation of the measurement data may be displayed on the companion device, e.g. wherein specific colors are used to highlight different aspects of the measurement process such as scan gaps, different point densities or measurement regions captured with acceptable / inacceptable device movement.

A further possibility to provide indication of the expected measurement movement / gesture could be audible instructions or alarms or means for haptic feedback, e.g. vibration of the mobile reality capture device. In another modification, a laser pointer or some other projecting device could be mounted on a gimbal to be invariant of the devices rotation and point to specific areas where e.g. further data is required to direct and instruct the user.

The system may further comprise an augmented reality device, e.g. augmented reality glasses, configured to use the feedback from the comparison of the determined motion pattern and the expected motion pattern to provide the user with indications of correct movements of the mobile reality capture device. In addition, the augmented reality device may be used to inform a user about and to point the user to specific problem areas in the environment, which need special care / special movements. For example, these problem areas are provided by an object detection algorithm as described above for the identification of a spatial constellation.

**Figure 7** schematically shows an embodiment of the IMU data analysis to detect the behavior of the surveyor and to provide the surveyor with feedback regarding the best practice and his current behavior. For example, the data analysis further includes a determination of a degree of user skill, e.g. a binary classification or a percentage estimate of user skill either for information only or with subsequent training recommendation.

A motion state tracker 19 is fed by inertial data of an IMU 20 associated with the movement of the mobile reality capture device. For example, the IMU 20 is part of the mobile reality capture device or is part of a companion device attached to the mobile reality capture device. The motion state tracker 19 measures and monitors a motion pattern 21 of the mobile reality capture device, wherein a machine learning module 22 comprising one or more machine learning algorithms is used to detect within the determined motion pattern 21 one or several particular movement categories 23 indicative of one or several environment-specific measurement situations and corresponding environment-specific movements of the mobile reality capture device.

For example, the machine learning module 22 comprises a deep learning module 24, which also extracts signal features. Alternatively, or in addition, the machine learning module comprises a so-called "classical" machine learning model, which includes the signal extraction process explained above. In addition, the machine learning module 22 may contain a comparator 25 as well, as the classifying of the motion pattern 21 into a particular movement category 23 includes comparing it to expected motion patterns 26.

For example, in the figure, the determined motion pattern 21 relates to a situation where the surveyor walks through a long corridor, which leads to a movement at roughly constant speed and height, without any lateral direction changes. For the sake of simplicity, the determined motion pattern 21 is depicted as time series of the height change z of the mobile reality capture device (increasing time t to the right). Other movement categories relate to other specific movements of the mobile reality capture device when executing specific measurement tasks, e.g. climbing up or down a stairway, opening a door, a measurement of a single object, e.g. wherein the object is measured by a circular pattern to observe all sides of the object, a high resolution measurement of an individual spot, e.g. wherein multiple passes of the mobile reality capture device are required, etc.

Based on the detected environment-specific measurement situation, the machine learning module 22 derives an expected motion pattern 26 of the mobile reality capture device, e.g. by taking into account a nominal environment-specific measurement movement associated to the current movement category 23 and possibly other limiting factors provided by the IMU data and/or visual perception data.

By way of example, to learn (i.e. "train") the machine learning module 22 expected motion patterns are recorded, wherein the recording comprises different device configurations as well as different users. Thus, a large space of possible expected motion patterns is covered. As discussed earlier, different device-companion configurations and different carriers, e.g. different people, might cause different motion patterns on the device and hence require calibration. The machine learning module learns a single model by learning features of each motion pattern independent of device configuration or user. Training is done offline and the model which encodes the expected motion patterns is uploaded to the device. Instead of a single algorithm several algorithms might be used, e.g. one per expected motion pattern as motion patterns might overlap. The data of the expected motion pattern is split into two datasets: one which will be used to train the model and one which will be used to test this and all further models.

The machine learning module may be available on the mobile reality capture device and/or on a separate processing unit, e.g. wherein the separate processing unit uses data of the mobile reality capture device in a streaming fashion. For example, in one embodiment, the machine learning module is used for postprocessing data on a separate computer. Here, for example, the recorded trajectory is visualized by the different identified motion patterns. In addition, events such as walking down/up stairs or opening doors can be highlighted in/on the trajectory.

Machine learning algorithms allow for a semi-automatic calibration by using transfer learning and re-training capabilities. Users can record their own data of the expected motion patterns, e.g. guided by visual feedback on the device or in a mobile app. This is done by recording the motion pattern of the user on device and then carrying out re-training either offline, e.g. at a computer where the recorded data and a software would be loaded or in the cloud, or on the device directly. In both cases features are calculated as before, wherein previously trained machine learning models and/or previously recorded motion patterns are used to bootstrap a new training process. For example, newly recorded data are automatically split into a training and test dataset. The model is trained using the new and optionally old training data. The new model can then be loaded onto the device. To assure quality of the model and evaluate its performance, automatic tests can be called to verify that the performance of the model has not degraded (regression testing), e.g. by using recorded motion patterns from the old and new test datasets.

The expected motion pattern 26 is then provided to a comparator 25, which is configured to carry out a comparison of the determined motion pattern 21 with the expected motion pattern 26. In case the comparison shows that the user has already carried out the correct movement / gesture with the mobile reality capture device, the user is provided with a corresponding feedback 27 (so-called affirmative feedback).

In a further embodiment, so-called "anomalies" are detected without the need to define expected motion patterns. Using unsupervised machine learning a "regular" or "nominal" movement behavior is learned by observing the measured motion pattern 21. Expected motion patterns are thus implicitly acquired and the comparator can warn the user whenever unexpected motion patterns occur and trigger an alarm. For example, such an unexpected behavior can be any motion pattern that is not part of regular surveying behavior such as drop of device or other sudden movements.

In the scenario depicted by the figure, the comparison (including analysis of the complete determined motion pattern 21 so far) shows that the user has not yet carried out the best practice for surveying while walking through a long corridor, e.g. lifting the mobile reality capture device up and to the side in order to avoid blockage of the field-of-view of the 3D surveying unit (e.g. a lidar unit) by the user's body. Here, the user is provided with corresponding feedback 27, which informs and/or guides the user about the required best practice movement. Later on, the comparison leads again to affirmative feedback as soon as the up lifting 28 and side movement of the mobile reality capture device has been detected by the comparator 25.

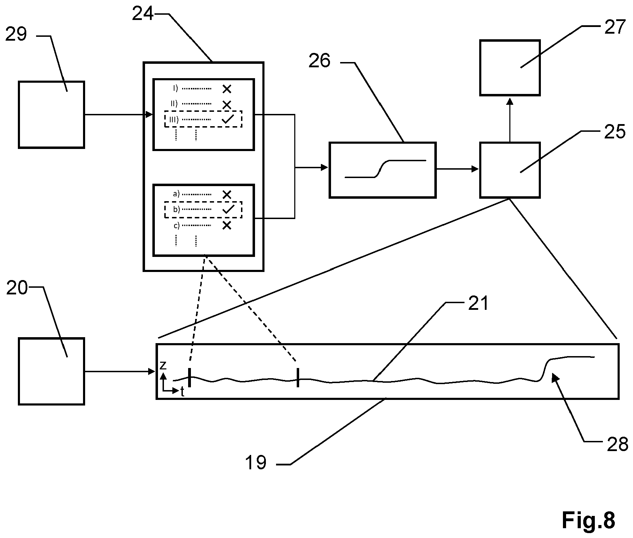

**Figure 8** schematically shows a further embodiment of the IMU data analysis, which additionally comprises an analysis of perception data 29, e.g. derived from coordinate measurement data provided by the lidar unit and from imaging data provided by a camera of the mobile reality capture device.

The perception data 29 provide for a visual recognition of spatial features of the environment and for an evaluation of a spatial arrangement of the mobile reality capture device relative to the spatial features. For example, when walking in a long corridor, the perception data allow determining a distance to the walls of the corridor. Thus, the analysis of the IMU data, which provides recognition of the scenario "walking in a long corridor" and thus indication to move the mobile reality capture device up and to the side, is improved by an analysis of the perception data, which may indicate on which side the mobile reality capture device has to be moved (if at all) depending on measured distances to the walls. In other words, the perception data allow improved context-specific evaluation, in which the environment-specific situation is taken into account.

In one embodiment, the IMU 20 is used with results of the on-device SLAM (not depicted in the figures) rather than the "raw" data, e.g. information such as position, velocity, attitude as determined by the SLAM algorithm. For example, the SLAM algorithm may process lidar data, visual data, and IMU data.

By way of example, the best practice movements and gestures are recognized based on rules, using machine learning, i.e. machine learning based detection and classification, or using hybrid approaches. For example, a hybrid approach includes a decision tree with relevant situations and respective running machine learning models or, vice versa, the hybrid approach uses classification of the processes using machine learning and then a rule-based approach.

For example, rule-based means that a fixed, more or less manually defined set of rules (so-called "conditions") is used to identify certain states. These conditions can be defined in a data-driven manner and/or can be partially adjusted manually by the user (e.g. adapting threshold values, fine tuning lengths of time intervals, limiting occurrences per time interval, etc.). For example, the rules can be "if-then" conditions and/or define simple threshold values. In particular, the rules can be statistically derived.

Rule-based approaches only allow relatively simple rules and are almost always defined manually. Using machine learning, complex patterns or rules can also be recognized and learned. By way of example, ML-based algorithms that could be used are Decision Trees, Random Forests, Support Vector Machines, or Neural Networks. These algorithms can be used both for signal classification and for a detector. For example, during the classification, the last measured values (e.g. of the last two seconds) are used with a defined update frequency (e.g. two Hz) and classified by the algorithm. If necessary, a further step «feature extraction» takes place before the algorithm is called. A neural network or other "deep learning" methods learn the features independently. For classic algorithms, defined statistics in the frequency or time domain could be calculated. The ML-based detector works in a similar way, but processes the time series continuously, i.e. in a streaming fashion.

In the hybrid approach, rule-based approaches are combined with machine learning models. For example, simple states could be recognized rule-based and more complex states using an ML approach.

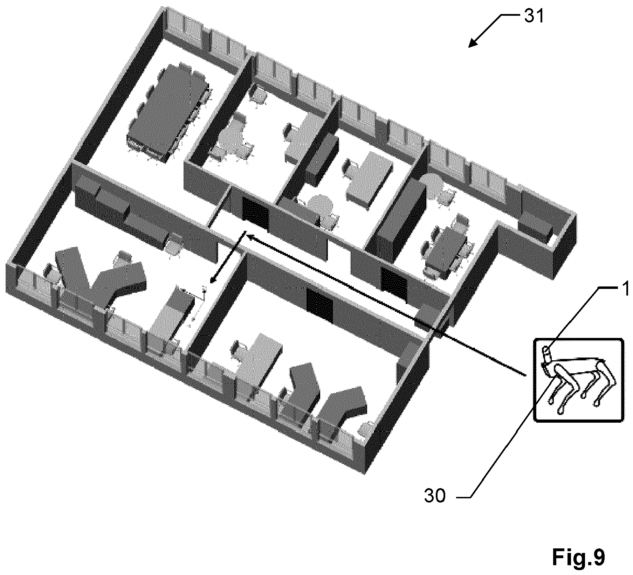

**Figure 9** depicts a further exemplary embodiment, wherein the mobile reality capture device 1 is carried by a robot 30 to survey a building 31. For example, the robot 30 is embodied as four-legged robot, wherein data of the 3D surveying unit are available as perception data to autonomously move the robot.

By way of example, a closed-control-loop is implemented for processing motion state detection information and feedback from the comparison of the determined motion pattern and the expected motion pattern into robot control commands.

By way of example, similarly to the user walking through an environment, specific movements of the robot and thus the mobile reality capture device are triggered by the system recognizing an environment-specific measurement situation such as an upcoming door passing.

The robot may be configured to move with or without pre-requisite machine-readable information about the environment prior to the mission. For example, in a so-called exploration mode often quite an active user control to move / command the robot is used. Alternatively, or in addition, the robot is configured to provide automated, repetitive tasks including mission planning for robot navigation as well as real time navigation improvements based on pre-requisite machine-readable location information such as location or re-location maps (e.g. sparse point cloud, a building-information model (BIM) or a computer-aided design (CAD) model).

For example, the system is configured to access mapping data providing a model of the environment and to track a location of the mobile reality capture device within the model of the environment. Then the location of the mobile reality capture device is taken into account to recognize the defined motion category of the determined motion pattern and/or the derivation of the expected motion pattern.

Although the invention is illustrated above, partly with reference to some preferred embodiments, it must be understood that numerous modifications and combinations of different features of the embodiments can be made. All of these modifications lie within the scope of the appended claims.

## Claims

1. System for providing 3D surveying of an environment (31), the system comprising a mobile reality capture device (1) configured to be carried and moved during generation of 3D measurement data, wherein the system comprises
• a 3D surveying unit arranged on the mobile reality capture device (1) and configured to provide the generation of the 3D measurement data for carrying out a spatial 3D measurement of the environment (31) relative to the mobile reality capture device (1), wherein the 3D surveying unit is configured to provide the spatial 3D measurement with a field-of-view of 360 degrees around a first device axis (8) and 120 degrees around a second device axis (11) perpendicular to the first device axis (8),
• an inertial measurement unit (20) comprising sensors including accelerometers and/or gyroscopes, and being configured to continuously generate IMU data related to a pose and/or acceleration of the mobile reality capture device (1), and
• a simultaneous localization and mapping unit configured to carry out a simultaneous localization and mapping process comprising generation of a map of the environment and determination of a trajectory of the mobile reality capture device (1) in the map of the environment,
**characterized in that**
the system comprises a motion state tracker (19) configured to use motion data regarding a movement of the mobile reality capture device (1) to determine a motion pattern (21) of the mobile reality capture device (1), wherein, if a determined motion pattern (21) corresponds to a defined movement category (23) associated to an environment-specific measurement movement of the mobile reality capture device (1), the system is configured to automatically perform a derivation of an expected motion pattern (26) of the mobile reality capture device (1) for the environment-specific measurement movement, and to carry out a comparison of the determined motion pattern (21) and the expected motion pattern (26),
wherein the system is configured to provide feedback (27) regarding the comparison of the determined motion pattern (21) and the expected motion pattern (26), particularly wherein the mobile reality capture device (1) is configured to take into account the feedback (27) to automatically perform an action associated with the expected motion pattern (26).

2. System according to claim 1, wherein the system comprises a database comprising a plurality of defined motion patterns (26), each defined motion pattern being associated with an environment-specific measurement movement of the mobile reality capture device (1), particularly wherein each defined motion pattern (26) is either pre-defined or user-defined, wherein the database is used for a categorization of the determined motion pattern (21) and/or the derivation of the expected motion pattern (26).

3. System according to claim 2, wherein the system is configured to establish a data connection with a remote server computer and to provide motion data to the remote server computer, wherein the system is configured
• to detect typical behavior of a carrier (30) of the mobile reality capture device (1) from the motion data and to send corresponding motion data to the remote server computer, wherein the sent data is dedicated to update pre-defined motion patterns stored at the remote server computer, and
• to receive updated pre-defined motion patterns from the remote server computer.

4. System according to one of the preceding claims, wherein the expected motion pattern (26) provides
• a nominal orientation or a sequence of nominal orientations of the mobile reality capture (1) device with regard to three mutually perpendicular axes of rotation of the mobile reality capture device (1), and/or
• a nominal relative position change or a sequence of nominal relative position changes of the mobile reality capture (1) device with respect to a current position of the mobile reality capture device (1) with regard to three mutually perpendicular spatial axes.

5. System according to one of the preceding claims, wherein a correspondence of the determined motion pattern (21) to the defined movement category (23) and/or the derivation of the expected motion pattern (26) is/are provided by a machine learning algorithm (22), which comprises processing of the motion data by a Kalman filter for an estimation of an attitude parameter, and particularly a velocity parameter, of the mobile reality capture device (1),
in particular wherein the processing of the motion data is carried out in sections for time windows of at least 1.5 seconds each or wherein the processing of the motion data is carried out in a rolling fashion by continuously processing a continuously generated time series of the motion data.

6. System according to claim 5, wherein the correspondence of the determined motion pattern (21) to the defined movement category (23) and/or the derivation of the expected motion pattern (26) is/are provided by taking into account a feature extraction step, which
• provides detection of a signal feature out of a plurality of different signal features, wherein each of the signal features is indicative of a defined environment-specific measurement movement out of a plurality of defined environment-specific measurement movements, and
• is used for the estimation of the attitude parameter, and particularly the velocity parameter,
in particular wherein the feature extraction step is provided by a deep learning algorithm (24) configured to learn the signal features independently or wherein the feature extraction step is provided by computing the motion data with defined statistics in the frequency or time domain of the motion data.

7. System according to one of the preceding claims, wherein the system is configured to analyze motion data in order to generate a movement model that takes into account parameters of a range of motion for a relative movement of the mobile reality capture device (1) when it is carried and aligned by the carrier (30) and/or a weight-distribution of a combination of the mobile reality capture device (1) with a companion device (17) and/or the carrier (30), wherein the movement model is taken into account for at least one of a providing of a correspondence of the determined motion pattern (21) to the defined movement category (23), the derivation of the expected motion pattern (26), and the comparison of the determined motion pattern (21) with the expected motion pattern (26),
in particular wherein a center of mass and a moment of inertia of the combination of the mobile reality capture device (1) with the companion device (17) and/or the carrier (30) is/are determined.

8. System according to claim 7, wherein the mobile reality capture device (1) comprises a calibration functionality based on a set of pre-defined control movements of the mobile reality capture device (1) to be carried out by the carrier (30), wherein motion data measured during the control movements are analyzed in order to generate the movement model,
in particular wherein the parameters of the range of motion provide information on a length of a boom-component carrying the mobile reality capture device (1).

9. System according to one of the preceding claims, wherein
• the mobile reality capture device (1) is configured to derive perception data (29), particularly from the 3D measurement data and/or from a sensor of the simultaneous localization and mapping unit (20), wherein the perception data (29) provide for a visual recognition of spatial features of the environment and for an evaluation of a spatial arrangement of the mobile reality capture device (1) relative to the spatial features,
• the system is configured to analyze the perception data (29) in order to provide a recognition of an environment-specific measurement situation with regard to a spatial arrangement of the mobile reality capture device (1) relative to spatial features in the environment (31), and
• to take into account the environment-specific measurement situation for deriving a motion category (23) of the determined motion pattern (21) and/or for the derivation of the expected motion pattern (26).

10. System according to claim 9, wherein
• the system is configured to access a database comprising a set of geometric and/or semantic classes of spatial features with corresponding classification parameters for identifying the geometric and/or semantic classes by the perception data (29),
• each of the geometric and/or semantic classes is associated with at least one of
∘ a rule regarding a minimum and/or a maximum distance between the mobile reality capture device (1) and the corresponding spatial feature associated with that class, and
∘ a rule regarding a nominal relative orientation of the mobile reality capture device (1) to the corresponding spatial feature associated with that class,
and
• the system is configured to use the database comprising the set of geometric and/or semantic classes to recognize the environment-specific measurement situation.

11. System according to one of claims 9 to 10, wherein
• the system comprises an object detection algorithm based on machine learning (22), wherein the object detection algorithm is specifically configured to identify a spatial constellation within the perception data (29),
• the spatial constellation is associated with a pre-defined sequence of motion states of the mobile reality capture device (1), particularly a sequence of relative orientations and/or distances between the mobile reality capture device (1) and the spatial constellation, and
• the system is configured to take into account an identification of the spatial constellation by the object detection algorithm for the recognition of the environment-specific measurement situation, wherein the pre-defined sequence of motion states is taken into account for the derivation of the expected motion pattern (26).

12. System according to one of the preceding claims, wherein the system is configured to access mapping data providing a model of the environment (31) and to track a location of the mobile reality capture device (1) within the model of the environment, wherein the location of the mobile reality capture device (1) is taken into account for deriving a motion category (23) of the determined motion pattern (21) and/or the derivation of the expected motion pattern (26),
particularly the system comprises an object detection algorithm according to claim 11 and the location of the mobile reality capture device (1) is used to identify the spatial constellation for the recognition of the environment-specific measurement situation.

13. System according to one of the preceding claims, wherein the 3D surveying unit is embodied as a laser scanner configured to carry out, during movement of the mobile reality capture device (1), a scanning movement of a laser measurement beam (10) relative to two rotation axes (8,11) in order to provide the generation of the 3D measurement data based thereon.

14. Method for 3D surveying of an environment (31) by using a mobile reality capture device (1), which comprises a 3D surveying unit configured to provide a generation of 3D measurement data for carrying out a spatial 3D measurement of the environment (31) relative to the mobile reality capture device (1), wherein the 3D surveying unit is configured to provide the spatial 3D measurement with a field-of-view of 360 degrees around a first device axis (8) and 120 degrees around a second device axis (11) perpendicular to the first device axis (8), wherein the method comprises the steps of
• generating the 3D measurement data by using the 3D surveying unit during a movement of the mobile reality capture device (1),
• generating IMU data related to a pose and/or acceleration of the mobile reality capture device (1), and
• carrying out a simultaneous localization and mapping process comprising generation of a map of the environment and determination of a trajectory of the mobile reality capture device (1) in the map of the environment,
**characterized in that**
the method comprises the steps of
• determining a motion pattern (21) of the mobile reality capture (1) device by using motion data regarding a movement of the mobile reality capture device (1),
• associating the determined motion pattern (21) with a defined movement category (23) associated to an environment-specific measurement movement of the mobile reality capture device (1),
• performing a derivation of an expected motion pattern (26) of the mobile reality capture device (1) for the environment-specific measurement movement as a function of the defined movement category (23),
• carrying out a comparison of the determined motion pattern (21) and the expected motion pattern (26), and
• providing feedback (27) regarding the comparison of the determined motion pattern (21) and the expected motion pattern (26), particularly wherein the feedback (27) is taken into account to perform an action associated with the expected motion pattern (26).

15. Computer program product comprising program code stored on a machine-readable medium or being embodied by an electromagnetic wave comprising a program code segment, wherein the program code comprises computer-executable instructions for performing, when executed in a surveying system, particularly in a system according to one of claims 1 to 13, the method according to claim 14.
